# EUROPEAN PATENT APPLICATION

(11) **EP 1 942 341 A1**
(43) Date of publication of application: **09.07.2008**
(21) Application number: 07388002.3
(22) Date of filing: 05.01.2007
(51) Int. Cl.: G01N 30/74, G01N 30/60, G02B 6/122, G01N 21/01

(54) **A device and a system for analysis of a fluid sample**

(71) Applicant: Danmarks Tekniske Universitet, 2800 Kgs. Lyngby (DK)
(72) Inventor: Mogensen, Klaus, 2500 Valby (DK); Mortensen, Niels Asger, 2800 Kongens Langby (DK); Kutter, Jörg, 2800 Kongens Lyngby (DK)
(74) Representative: Jensen, Peter Kim

(57) **Abstract**

The invention relates to a microfluidic device for the analysis of a fluid sample by separation, such as chromatography, and optical probing. The device comprises a separation part (2) and at least one optical probing region (3) overlapping the separation part (2). The separation part (2) comprises at least one fluid permeable microfluidic channel (4) each comprising at least a first set of micro-structure elements (7). The microfluidic channel (4) and/or micro-structure elements (7) are adapted to interact with a fluid flowing through the microfluidic channel (4) in order to separate the fluid into different components. The micro-structure elements (7) form an electromagnetic filter, such as a photonic crystal, which is sensitive to the optical properties of the fluid components, when permeating the microfluidic channel (4). In the optical probing part (3) the different components of the fluid are detected using the same micro-structure elements (7) for providing a well-defined fluid separation and the electromagnetic filter for enhanced optical probing.

## Description

The present invention relates to a microfluidic device for the analysis of a fluid sample with respect to different components of the fluid. The invention furthermore relates to a method for analysing a fluid sample with respect to different components of the fluid.

Microfluidic devices and systems have attracted a strong interest within many fields, such as chemistry, bio-chemistry, and medical or pathological diagnosis due to the high potential for automation of cumbersome laboratory procedures by integration of different tasks on a single chip. Amongst these tasks is the analysis of a fluid with respect to the different components of the fluid.

A versatile and therefore very attractive probing technique for characterising a fluid is optical probing, i.e. exposing a fluid sample to light and measuring the optical response. However, in microfluidic systems, optical probing often suffers from low signal levels and low signal-to-noise-ratios because of the very small interaction volume available for optical probing.

Photonic crystals are micro-structured materials with a periodic or quasi-periodic modulation of the optical properties, such as the refractive index. The periodic or quasi-periodic modulation results in unique optical properties for the interaction of light, in particular if the periodicity of the modulation is of the same order of magnitude as the wavelength of the probing light. In certain cases the modulation can lead to a so-called photonic band gap where the propagation of light of certain wavelengths is prohibited and the propagation of light in adjacent wavelength regions follows a non-linear dispersion relation.

An example of a one-dimensional implementation of a photonic crystal is a multilayer (anti-)reflection coating or Bragg-filter. Examples of two-dimensional implementations are photonic crystal fibres or planar waveguide structures.

WO 2005/089129 discloses a biochemical sensor employing a photonic crystal in order to measure refractive-index change of a fluid sample. The photonic crystal consists of a slab of silicon with a regular triangular structure of air holes comprising a single defect, where the diameter of one of the air holes is reduced as compared to the others. The defect is arranged in the optical path of a pair of input and output optical waveguides.

Filling the defect with the fluid sample allows for optically measuring the refractive index of that fluid sample. However, the sensor does not allow for analysis of the fluid sample with respect to the different components of the fluid.

The object of the present invention is to provide a device that allows for analysing a fluid sample with respect to the different components of the fluid by optical probing overcoming the above-mentioned shortcomings.

According to the invention, this is obtained by the microfluidic device extending in a longitudinal direction and having a first transverse direction perpendicular to the longitudinal direction, and a second transverse direction perpendicular to both the longitudinal and the first transverse direction, said device comprising a separation part and at least one optical probing region overlapping the separation part, wherein said separation part comprises at least one fluid-permeable microfluidic channel extending substantially in the longitudinal direction and having a first end with a first opening and a second end with a second opening as well as a first side and a second side, and wherein said microfluidic channel comprises at least a first set of micro-structure elements partially filling the microfluidic channels with a filling factor of f= Vₘ/V₀, where Vₘ is the volume occupied by the micro-structure elements within a region of a volume V₀ in the microfluidic channel that is filled with micro-structure elements, and said microfluidic channel and/or micro-structure elements are adapted to interact with a fluid, when said fluid enters the microfluidic channel through the first opening and flows towards the second opening, in order to separate said fluid into different components, and said micro-structure elements in at least one direction being arranged with a substantially periodic distribution with a mutual interspacing a between micro-structure elements so as to form an electromagnetic filter, which is sensitive to the optical properties of said fluid components, when permeating the microfluidic channel.

The separation part acts as a column for separating a fluid flowing from the first end to the second end into individual components since different components of the fluid obtain different migration velocities. An example for a separation technique is chromatography relying on the interaction between the fluid and the micro-structure elements and/or the microfluidic channel walls. The interaction takes place at the interface between the fluid and the solid material, i.e. on the surface of the micro-structure elements and/or the microfluidic channel walls. The interaction can be based on charges at the interface, or rely on adsorption to the surfaces or interaction with molecules immobilized on the surface of the microstructure elements. Common materials used in the fabrication of microfluidic channels are polymers, silicon, silicon nitride, or silica glass. These materials require a known surface modification in order to be adapted for chromatographic separation.

Further to the separation, the analysis of the fluid sample also involves the detection of the separated components of the fluid. In the device according to the invention, the detection is performed by probing the separated components of the fluid by means of light. Examples for probing techniques are measuring absorption, reflection, scattering, such as Raman-scattering, or fluorescence of the fluid. The probing technique involves transmitting light into the optical probing region of the device, collecting and analysing the collected light with respect to optical parameters, such as spectral composition (spectroscopy), maximum/minimum transmission and/or reflection, polarisation, intensity, and/or propagation direction.

When a fluid flows through the microfluidic channel, a substantially periodic distribution of fluid and micro-structure elements is formed. A substantially periodic distribution means that the distribution is periodic or quasi-periodic. The substantially periodic distribution can also be chirped. The substantially periodic distribution of fluid and micro-structure elements acts as an electromagnetic filter, which is sensitive to for instance the refractive index of the fluid flowing through the channel, and is adapted to enhance the optical response of the fluid to incoming electromagnetic radiation and/or to select the response from the fluid, for example in a preferred spectral range, in order to enhance the signal to noise ratio.

Thereby the different components of the fluid are detected using the same micro-structure elements for providing a well-defined fluid separation and an integrated electromagnetic filter for enhanced optical probing within the separation part. Performing the optical probing within the same channel that provides for the separation avoids signal broadening artefacts due to separation peak dispersion, for example in the otherwise necessary fluid transfer from a separation part to a detection part.

The fluid can be a liquid or a gas.

The term "optical" as used in this application applies not only to visible light, but also to ultra-violet or infra-red radiations, i.e. electromagnetic radiation with wavelengths in the range between 10nm and 1mm. Accordingly, the term "light" applies to electromagnetic radiation with wavelengths in the range between 10 nm and 1 mm.

The term "microfluidics" refers to devices and systems for handling fluids where at least one critical dimension, such as a channel width, is less than 1 mm.

According to the invention, the electromagnetic filter may be a photonic crystal for light. The interaction of light entering the optical probing region of the device with the fluid sample is thus strongly affected by the periodicity imposed on the fluid by the micro-structure elements in the channel.

In a further development of the above embodiment the photonic crystal exhibits one or more photonic band gaps, i.e. wavelength regions where propagation of light is prohibited. At the edges of these band gaps, the propagation of light typically exhibits strong non-linear dispersion relations that can be exploited to enhance the interaction between the incoming light and the fluid sample, thus improving the optical response signal level and signal-to-noise-ratio.

Further according to the invention, the micro-structure elements can be made from a dielectric material with a refractive index larger than one. In order to impose a substantially periodic modulation on the refractive index of the fluid sample, the refractive index of the microstructure elements should be chosen different from the range of refractive indices expected for the components of the fluid sample.

The microstructures can be made from a combination of a large variety of materials comprising, but not limited to, plastics, such as PMMA or polycarbonate, glass, such as silica, semiconductor materials and derived material systems, such as silicon and silicon nitride. Often the microstructure elements are formed of the same material as the microfluidic channel walls, but can also be fabricated from different materials and arranged in the microfluidic channel.

In a further development of the above embodiment, the refractive index of the micro-structure elements is chosen in the range between 1.2 and 5 referring to a device fabricated from plastic, glass or semiconductor-based material systems, or a combination thereof.

In a further development of the above embodiment, the refractive index of the micro-structure elements is chosen in the range between 1.3 and 2 referring to a device fabricated from a variety of glass or plastic materials.

It should be noted that the refractive index of the materials depends on the wavelengths of the light used for optically probing the fluid sample. A suitable refractive index of the micro-structure elements can therefore also be chosen by optically probing in a spectral region suitable for achieving the substantially periodic modulation of the fluid sample.

In a preferred embodiment according to the invention, the device is provided on a substantially planar substrate, the longitudinal direction and the first transverse direction of the device being arranged within the plane of said substrate.

Arranging the device on a planar substrate allows for employing common planar fabrication techniques for the fabrication of the device. Furthermore, this arrangement allows for taking advantage of integrating the device with other fluidic, optical, electrical, electronic and/or magnetic components on a planar substrate in order to build lab-on-a-chip systems using known planar micro- and nanofabrication, assembly and packaging techniques.

Further according to the invention, the micro-structure elements are arranged with a substantially periodic distribution in one dimension. The micro-structure elements thus form an interference filter, such as a one-dimensional Bragg-grating. Preferably, the micro-structure elements are arranged with a substantially periodic distribution in the in-plane transverse direction of the substrate. The in-plane arrangement has advantages in the fabrication of the device, as it allows for patterning the channel and the micro-structure elements in the same fabrication steps. Furthermore, the in-plane arrangement facilitates the integration with optical components on the same substrate.

In a preferred embodiment according to the invention, the migration velocity of a given fluid component does not depend on the transverse location of the fluid component in the microfluidic channel, and planes of constant migration velocity are essentially planes perpendicular to the longitudinal axis of the device. In this embodiment, the orientation of the periodic structure in a transverse direction of the device has the advantage that the optical path probes the same fluid components.

Further according to one aspect of the invention, the micro-structure elements are oblong and extending substantially in the longitudinal direction of the substrate so as to form a number of substantially parallel channels within said at least one microfluidic channel. The micro-structure elements thus form a high-surface-to-volume-ratio structure with partition walls partitioning the microfluidic channel into identical parallel sub-channels simultaneously acting as a Bragg grating type interference filter in the in-plane transverse direction of the substrate. In practice, variations in the surface properties and/or the geometrical definition of the partition walls can result in different propagation velocities for the same fluid component propagating in different sub-channels. In order to avoid such artefacts, the partition walls according to a further development of the above-mentioned embodiment are sub-divided into segments in the longitudinal direction, thus leaving small openings for fluid communication between adjacent sub-channels. Significant differences in concentration of a given fluid component in the in-plane transverse direction will thus be compensated for due to diffusion in the direction of the concentration gradient.

Further according to one aspect of the invention, the micro-structure elements are arranged substantially periodic in two dimensions, preferably periodic in the plane of the substrate. The micro-channel thus forms a labyrinth-type separation structure simultaneously acting as a two-dimensional photonic crystal, where the micro-structures can be arranged with both a first and a second spatial distribution frequency in the plane of the substrate. The periodicity can be described in terms of two unity lattice vectors *u1* and *u2*, preferably in the plane of the substrate, and lattice constants *a1* and *a2* along the respective lattice vectors. More complex lattice structures, for example comprising micro-structure elements of different materials and/or of different geometry and/or a plurality of sets of micro-structure elements, may be combined within the same channel.

In a further development of the above mentioned embodiment, the micro-structure elements are arranged substantially periodic in two dimensions in the plane of the substrate having a quadrilateral distribution so as to form a quadrilateral lattice structure.

The dispersion relation governing the optical probing depends on the orientation of the photonic crystal with respect to the optical path. The lattice vectors of the quadrilateral distribution can be aligned with the longitudinal and the in-plane transverse direction.

The lattice vectors of the quadrilateral distribution may also be oriented at an angle with respect to the device, such that.a direction of symmetry of the photonic crystal coincides with the longitudinal direction or the in-plane transverse direction of the substrate. For example an arrangement of square unit cells may be rotated with respect to the longitudinal axis of the device by 45 degrees about an axis in the out-of plane transverse direction providing a further dispersion relation, while maintaining essentially symmetric conditions for the fluid flow.

In a further development of the above mentioned embodiment, the micro-structure elements are arranged substantially periodic in two dimensions in the plane of the substrate having a triangular distribution so as to form a triangular lattice structure. The triangular lattice structure provides an alternative set of dispersion relations for the optical probing measurements. Preferably, the triangular lattice is oriented such as to maintain essentially symmetric conditions for the fluid flow. This is provided if one of the lattice vectors defining the triangular lattice is oriented along the longitudinal direction of the device.

Further according to the invention, the micro-structure elements are rods extending in the transverse direction out of the plane of the substrate from a bottom wall of the microfluidic channel to a top wall of the microfluidic channel. This configuration is particularly suited for fabrication using planar pattern definition and transfer techniques, such as semiconductor wafer-based fabrication techniques, as well as injection moulding or embossing techniques, when fabricating the device from polymer materials.

Further, according to one aspect of the invention, the micro-structure elements are arranged substantially periodic in three dimensions. The three-dimensional lattice structure provides an alternative set of dispersion relations for the optical probing measurements. For each set of micro-structure elements, the periodicity can be described in terms of three unity lattice vectors *u1, u2* and *u3,* preferably in the plane of the substrate, and lattice constants *a1*, *a2* and *a3* along the respective lattice vectors. More complex lattice structures, for example comprising micro-structure elements of different materials and/or of different geometry and/or a plurality of sets of micro-structure elements, may be combined within the same channel. Three-dimensional structures may for example be built as a stack of two-dimensional structures. Alternatively, a three-dimensional structure may be fabricated in an existing channel, for example as a hexagonal close-packed arrangement of essentially monodisperse nano- or micro-spheres, thus forming a fluid-permeable separation structure simultaneously acting as a three-dimensional photonic crystal. The mutual distance between the spherical micro-structure elements is in this case given by the diameter of the spheres.

Further according to the invention, the device may comprise a plurality of sets of micro-structure elements. This arrangement occurs in more complex structures with enhanced optical functionality, such as waveguides, resonator cavities, or intercalated sets of rods with different rod radius r.

In the above-mentioned embodiments according to the invention, the filling factor is in the range between 0, corresponding to the absence of micro-structure elements, and 1, corresponding to an impermeable channel, where both values are not included. In practical applications, the filling factor f is in the range 0.05 - 0.95, alternatively in the range 0.2 - 0.8, alternatively in the range 0.3 - 0.7. For two-dimensional structures, the filling factor reduces to a ratio of the cross-sectional areas of the micro-structure elements and the microfluidic channel in the plane of periodic modulation. For structures modulated only in one direction, such as in a microfluidic channel with partition walls of thickness d arranged periodically in the in-plane transverse direction with periodicity *a*, and extending in the longitudinal direction, the filling factor reduces to the ratio of the critical dimension d to the period *a*, i.e. f = d/a.

Further according to one aspect of the invention, the device comprises an input port, such as a waveguide, which is connectable to a light source, such as a laser, a light-emitting diode or a white light source, and which is arranged in or at least in vicinity of the optical probing region at the first side of the at least one microfluidic channel. The optical input port provides optical access to the device for transmitting probing light into the optical probing region. The optical input port can be an integrated optical waveguide operable to receive light at a distal end, guiding the light towards a proximal end placed in or in the vicinity of the optical probing region of the device, and transmitting the light from the proximal end into the optical probing region.

Further according to one aspect of the invention, the device comprises an output port, which is connectable to an optical detection circuit, and which is arranged in or at least in the vicinity of the optical probing region at the second side of the at least one micro-fluidic channel and/or at the first side of the at least one microfluidic channel.

The optical output port provides optical access to the device for collecting the optical response to the probing light from the optical probing region. The optical output port may be arranged on the second side of the device opposite the optical input port (forward scattering configuration), or on the first side of the device adjacent to or coinciding with the optical input port (backward scattering configuration). It should be noted that it is also possible to construct a device collecting the optical response from the optical probing region, utilising both backward and forward scattering configurations simultaneously.

The optical output port can be an integrated optical waveguide operable to receive light at a proximal end placed in or in the vicinity of the optical probing region of the device, guiding the light towards a distal end that can be connected to an optical detection circuit, such as a spectrometer, polarisation analyser, or a detector measuring the intensity of the collected light.

Further according to one aspect of the invention, along the longitudinal direction of the optical probing region the device comprises a number of input ports and a number of corresponding output ports. This embodiment according to the invention provides for a number of optical probing regions along the device, for example for measuring the migration velocities of the different components via time-of-flight measurements. Thereby, it is possible to probe yet another property of the fluid components.

In a preferred embodiment according to the invention, the number of input ports is implemented by an integrated optical waveguide network, where a single optical waveguide at the distal end is split by waveguide splitters into a number of optical waveguides at the proximal end. Accordingly, the number of output ports may be combined into a single output waveguide by means of waveguide couplers.

In a further development of the above-mentioned embodiment according to the invention, the same optical port acts as an input port and as an output port. The optical probing can thus be performed in backscatter configuration with only one optical access required. Alternatively, the optical input and the optical output signal may already at chip level be separated by means of a waveguide splitter.

The object of the invention is also obtained by a system comprising a device according to the invention and further comprising a first microfluidic network for preparation and injection of a fluid sample into the first opening of the microfluidic channel, a second microfluidic network for disposal and/or further processing of the fluid sample after the analysis and connected to the second opening of the microfluidic channel, at least one light source connected to the at least one input port, optical detection means connected to the at least one output port, and means for driving the fluid flow, such as an electrical circuit or hydrostatic pressure means. Examples of suitable light sources are lasers, light-emitting diodes, or white light sources. Examples of detection means are photo multiplier tubes, photo diodes, diode arrays or imaging sensors. The optical detection means can further comprise optical analysis means, such as gratings, optical filters or monochromators for performing optical spectroscopy.

A typical measurement system comprises a fluid handling network, a circuit for driving the fluid flow, such as an electrical circuit, and an optical probing circuit with light sources, free-space or waveguide optics, and optical detection and analysis components. Furthermore, computer means may be provided for controlling the measurement and collecting, storing and analysing the data, said computer means comprising data collection means, data storage means and display means.

Furthermore, in a system according to one aspect of the invention, the optical input port and/or the optical output port are formed on the substrate by integrated optical waveguides. Further parts of the system may also be integrated or hybridised onto the same substrate, such parts comprising light sources, optical analysis means, optical detection means, as well as electrical components for driving or reading these optical components or for driving the fluid flow. In addition, the system can comprise integrated electronics, especially if the substrate is a silicon chip.

The purpose of the invention is also obtained by a method for probing the optical characteristics of a fluid sample in a fluid permeable microfluidic channel having a longitudinal direction with a first end with a first opening and a second end with a second opening as well as a first side and a second side, the microfluidic channel comprising a number of micro-structure elements arranged within the microfluidic channel, wherein the method comprises the steps of:
a) Injecting the fluid sample into the microfluidic channel through the first opening,
b) separating the fluid sample by use of at least a number of said micro-structure elements into different components by flowing said fluid sample towards the second opening, and
c) transmitting light from the first side into an optical probing region of the microfluidic channel, comprising at least a number of said micro-structure elements being arranged with a substantially periodic distribution,
d) collecting out-coming light from the microfluidic channel, and
e) analysing the collected light with respect to optical parameters, such as spectral composition, polarisation, intensity and/or propagation direction.
   The above-mentioned method has the advantage that separation and optical probing can be performed in one single process utilising the periodic distribution of the micro-structure elements in the optical probing region for optically probing and analysing components of the fluid sample.
   Further according to one aspect of the invention, the separation is performed by use of at least a number of said periodically distributed micro-structure elements. This has the advantage that the same micro-structures are thus used for separation and optical probing, the micro-structures together with the microfluidic channel forming a separation column with an optical probing region.
   In a further development of the above-mentioned method according to the invention, the out-coming light is collected at the second side of the channel in a forward-scattering configuration. This can be implemented by input and output waveguides that are aligned with respect to each other or, alternatively arranged at an angle with respect to the channel and/or with each other.
   In a further development of the above mentioned method according to the invention, the out-coming light is collected at the first side of the channel in a backward-scattering configuration. This can be implemented by separate input and output waveguides that are arranged at an angle with respect to the channel and/or with each other. This can also be realised by using the same waveguide for emitting and collecting light.
   Further according to the invention, a method is provided, wherein the fluid sample is continuously flown through the separation part and the optical detection region, and wherein the probing of the optical characteristics of the fluid passing through the optical probing region is carried out continuously or repeatedly by performing steps c) through e) of the above-mentioned method. By continuously or repeatedly measuring the optical response over a period of time, or at discrete points in time, a trace can be obtained, representing the composition of the fluid sample, such as in a chromatographic sequence.
   For example it is possible to transmit white light into the optical probing region via an input port, collecting the transmitted and/or the reflected light at corresponding output ports, and analysing the spectral distribution of the collected light in a spectrometer. The location of spectral features, such as maxima or minima, in the thus obtained transmission and reflection spectra depends on the refractive index of the fluid sample. Tracking the location of these spectral features as a given fluid sample is passed through the separation part and the optical probing region provides an optically probed characteristic trace for the components of that fluid sample.
   Alternatively, spectral measurements can be performed by replacing the white light source of the above-mentioned embodiment by a tuneable light source and, at the output port, observing the transmitted and/or reflected intensity as a function of the wavelength of the tuneable light source.
   Alternatively, the optical probing of changes in the refractive index of the fluid sample can be performed by illuminating the optical probing region with a white light source and measuring the transmission and/or reflection within a narrow spectral band located on the shoulder of a spectral feature, such as a transmission minimum.
   Further according to the invention, a method further comprises the step of:
f) Comparing the obtained optical characteristics data with reference data.

The reference data may stem from simultaneously performed probing of the optical characteristics of a reference sample, such as for performing a differential measurement, or reference data stored in a computer. The comparison can be performed optically, e.g. by interference between the reference output and the probing output. The comparison may also be performed on a computer comprising data collection means, data storage means, data processing means and display means, where the reference data is data stored on that computer. In particular, the comparison can also be understood as a calibration.

In the following, the invention is described with reference to the drawings. The drawings show in:
Fig. 1 An embodiment of a device according to the invention, seen schematically from above,
Fig. 2 a cross section along line II - II in Fig. 1 of the device from Fig. 1,
Fig. 3 a scanning-electron micrograph of an embodiment of the device according to the invention,
Fig. 4 a transmission spectrum for a device according to the invention,
Fig. 5 the spectral location of transmission minima in the transmission spectrum of Fig. 4 as a function of the fluid sample refractive index,
Fig. 6 a schematic view of a further embodiment of a device according to the invention,
Fig. 7 a schematic view of a further embodiment of a device according to the invention, and
Fig. 8 a schematic view of a further embodiment of a device according to the invention.
Fig. 9 a transmission spectrum of a fluid obtained using a further embodiment of a device according to the invention.

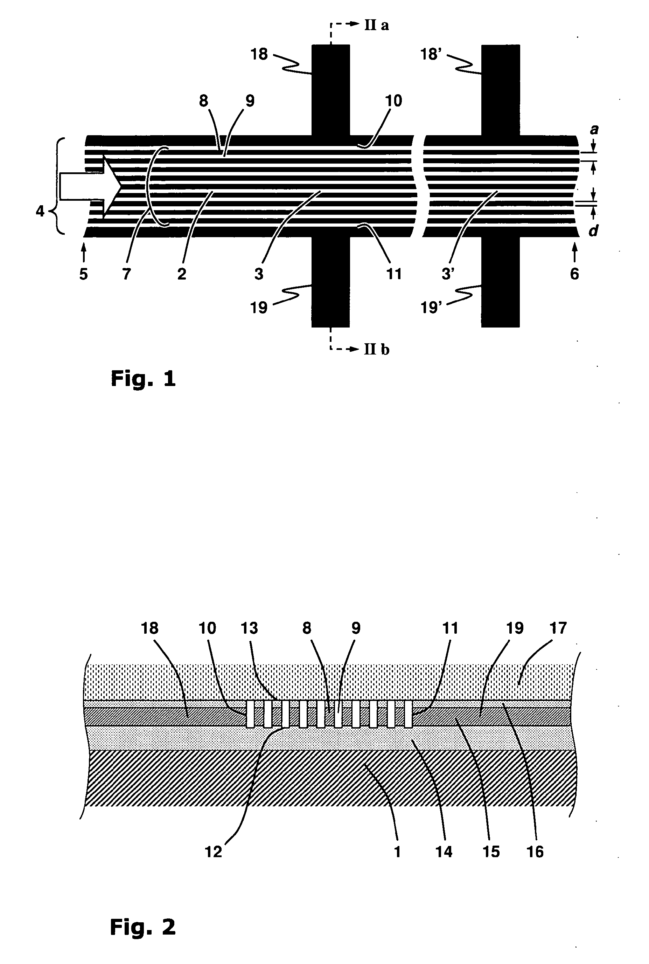

A first embodiment of a device according to the invention implemented on a substrate 1 is shown in Fig. 1. The substrate 1 is shown in projection from above. The device has a separation part 2 and an optical probing region 3 at least partially overlapping the separation part 2.

The separation part 2 comprises a microfluidic channel 4 which has a first end 5, where the fluid sample can enter the separation part 2 of the device, and a second end 6, where the fluid can leave the separation part 2 of the device. The microfluidic channel 4 comprises a set of microstructure elements 7 in the form of parallel slabs 8 extending in longitudinal direction of the microfluidic channel 4 from the first end 5 to the second end 6 of the separation part. The slabs 8 have a thickness d and are arranged periodically in the in-plane transverse direction of the substrate 1 with a mutual interspacing *a*. The slabs 8 form - together with the walls of the microfluidic channel - a number of separation sub-channel 9. In the longitudinal direction, the slabs can be segmented leaving openings for fluid communication between neighbouring separation sub-channels 9 in order to reduce artefacts resulting from variations in the propagation conditions between separation sub-channels.

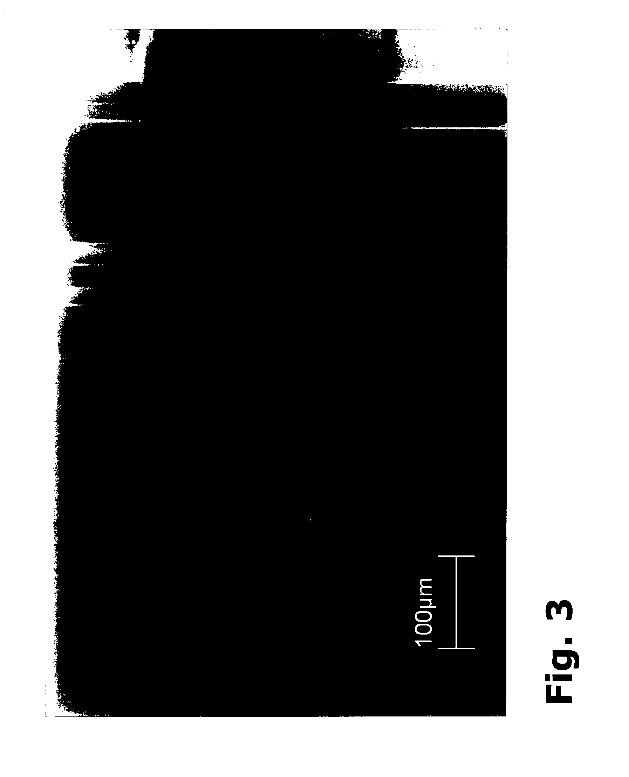

In a further development of this embodiment, the slab segments are arranged in columns, wherein adjacent columns are shifted with respect to each other in the in-plane transverse direction by half a period, as shown on the scanning electron micrograph of Fig. 3. This lay-out further reduces the build-up of separation dispersion artefacts.

The optical probing region 3 at least partially overlaps the separation part 2 of the device with the periodically arranged slabs 8 in the microfluidic channel 4. The optical probing region is on the sides 10, 11 optically connected to optical waveguides for input 18 and output 19.

A plurality of further optical probing regions 3' may be arranged along the microfluidic channel and connected to further optical input ports 18' and optical output ports 19'. This has the advantage that several measurements can be performed simultaneously in different locations of the separation part. The different optical probing regions can also be used to measure fluid propagation velocity by time-of-flight measurements.

Fig. 2 shows a cross-section through the optical probing region 3 of the device along the line IIa - IIb in Fig. 1. The device is built on a substrate 1. The layer sequence comprises a silicon substrate layer 1, a lower cladding layer 14 of SiO2, a core layer 15 of nitrogen-doped Si02, a top cladding 16 of Si02, and a cover glass 17. The microfluidic channel 4 comprising the microstructure elements 7 is etched by conventional photolithographic and etching techniques. The microfluidic channel 4 is closed at the top 13 by the cover glass 17.

The optical input 18 is connected to the first side 10, and the optical output 19 is connected to the second side 11 of the microfluidic channel 4. The input port 18 and output port 19 are optical waveguides defined by etching through the core layer 15. The light is guided in the core layer 15 and confined by the refractive index step between the core layer 15 and the cladding layers 14, 16.

The microstructure elements 7 are slabs 8 extending in the out-of plane direction of the substrate 1 from the bottom 12 of the microfluidic channel 4 to the top 13 of the microfluidic channel 4. Separation sub-channels 9 are formed between the slabs 8. In a transverse direction, the periodic arrangement of slabs 8 is placed in optical alignment with the input and output waveguides 18, 19. The periodic arrangement of slabs 8 intercalated by sub-channels 9 results in a periodic modulation of the refractive index. The periodicity *a* is chosen such that a Bragg-type interference filter is formed for the wavelengths λ of the probing light. In practical applications, the ratio λ/*a* between wavelength λ and periodicity *a* is in the range between 0.1 and 10, preferably between 0.3 and 3.

When a fluid sample permeates the optical probing region 3, the fluid fills the sub-channels 9. The optical characteristics of the Bragg-filter are therefore sensitive to the refractive index of the fluid in the sub-channels 9.

When a fluid sample is driven through the separation part, e.g. by applying a voltage to the fluid in the longitudinal direction of the microfluidic channel, the microstructures 7 typically support the so-called stationary phase, and the fluid sample acts as the mobile phase. The stationary phase most often consists of molecules immobilized on the inner surface of the microfluidic channel and/or microstructure elements. Different components of the fluid, thus driven through the stationary phase supported by the micro-structure elements 7, exhibit different propagation velocities and are therefore separated to sequentially pass through an optical probing region 3. The different fluid components are detected by monitoring the refractive index of the fluid passing through the optical probing region 3.

In order to perform a chromatographic separation, the surface of the microstructures 7 as well as the walls 10, 11, 12, 13 of the microfluidic channel 4 can be modified to be adapted for chromatography by means of known wet-chemical surface modification processes. Chromatographic separation relies for example on surface-charge based interaction, hydrophilic/hydrophobic interaction, adsorption and/or ion-exchange. Other separation techniques may rely on a merely geometric interaction of the fluid components with the microstructure elements 7, wherein fluid components of smaller molecular size pass faster through the arrangement of microstructure elements than larger molecules.

By way of example, the device shown in Fig. 1 and Fig. 2 comprises nine microstructure slabs 8 forming together with the sidewalls 10, 11 and bottom and top walls 12, 13 ten separation sub-channels 9, and has the following dimensions. The slabs 8 have a thickness d = 3.7 µm, and are spaced with a periodicity of a = 6.8 µm, forming sub-channels 9 with a width of 3.1 µm between them. The total channel width from the first side 10 to the second side 11 of the microfluidic channel 4 is 64.3 µm. The microfluidic channel 4 is 10 µm deep and is formed by etching into the layer sequence by 3 µm of the top cladding 16 and 7 µm of the core layer 15. The lower cladding 14 of SiO2 has a thickness of 10 µm. The input and output optical waveguides 18, 19 are etched to have a width of 24 µm and are attached to the separation part 2 of the microfluidic channel 4 at an angle of 90°. The shown configuration with the optical input 18 arranged on the first side 10 and the optical output 19 arranged opposite to the input 18 on the second side 11 is suited for transmission measurements, such as transmission spectroscopy. Other optical probing techniques, such as reflection or scattering measurements will require different arrangements of the input 18 and output 19 optical waveguides, such as placing input 18 and output 19 ports on the same side of the microfluidic channel, optionally at an angle different from 90°.

In practice, a number of 1 - 100 periodically spaced slabs 8 and channel widths of up to 1 mm are applicable. More than 100 slabs 8 are in principle possible, but the increasing number of slabs makes it increasingly difficult to fabricate the device.

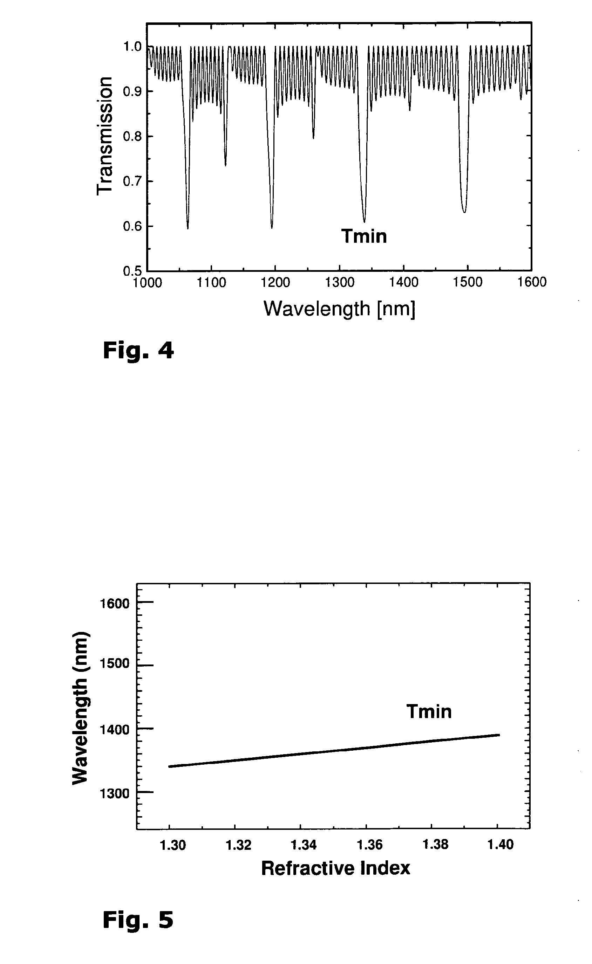

Fig. 4 shows a simulated transmission spectrum for the device according to the invention with the above-mentioned dimensions and for infrared radiation in the wavelength range from 1000 nm to 1600 nm, where the channel is filled with water of refractive index 1.32. The simulation assumes plane electromagnetic waves input from the first side 10 of the microfluidic channel 4 and propagating along the in-plane transverse direction of the microfluidic channels. The location of the spectral features, such as the pronounced transmission minima, depends on the refractive index of the fluid filling the microfluidic channel 4, as shown in Fig. 5. Fig. 5 shows a graph of the spectral location of the transmission minimum Tmin in Fig. 4. Different fluid components with different refractive indices can therefore be detected by monitoring the spectral position of spectral features, such as Tmin, as the different fluid components pass through the optical probing region 3.

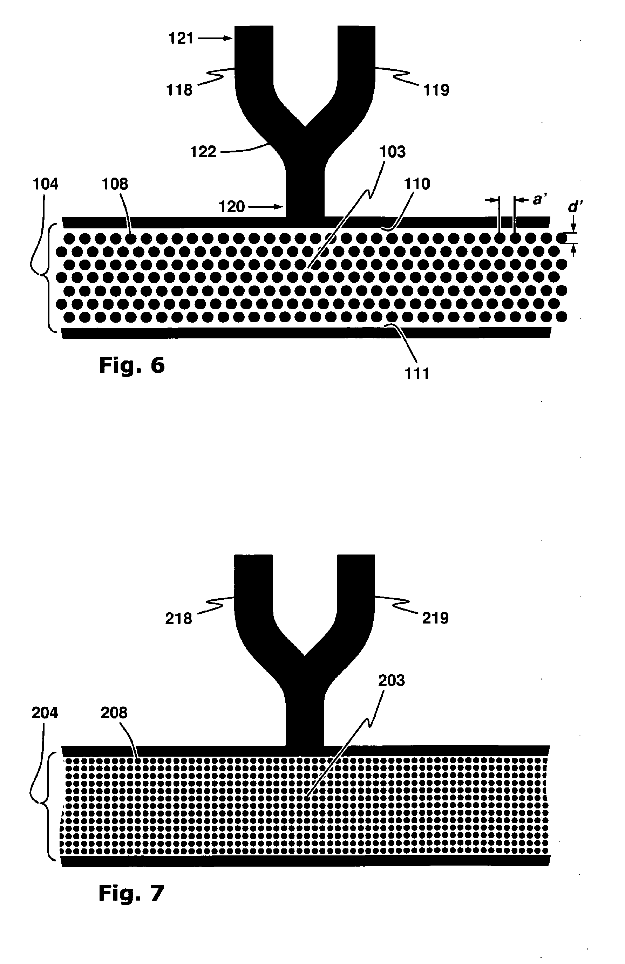

Fig. 6 shows a further embodiment according to the invention where the microstructures 7 are circular rods 108 of diameter d' extending from the bottom 12 to the top 13. The rods 108 are periodically arranged in an equilateral triangular lattice with lattice constant *a'*. The ratio of rod diameter d' to lattice constant a' illustrated in Fig. 6 is d'/a' = 0.67 with a filling factor f(triangle) = 0.40.

The arrangement of the circular rods 108 provides a two-dimensional photonic crystal for wavelengths, which may exhibit a photonic band gap.

The optical probing region 103 is on the first side 110 of the microfluidic channel 104 connected to an optical input port 118, which at the proximal end 120 acts simultaneously as an optical output port 119. This arrangement is particularly suited for reflection measurements. At the distal end 121, the optical waveguides are split into two waveguides, one acting as the optical input port 118 and the other acting as theoptical output port 119. An additional output port (not shown) arranged opposite to the optical input port on the second side 111 of the microfluidic channel 104 may provide for simultaneous measurements of the transmission, e.g. for determining absorption in the sample.

Fig. 7 shows another embodiment of the device according to the invention where the microstructures 7 are circular rods 208 of diameter d" extending from the bottom 12 to the top 13. The rods 208 are periodically arranged in a square lattice with lattice constant *a".* The ratio of rod diameter d" to the lattice constant a" illustrated in Fig. 7 is *d"*/*a"* = 0.67 with a filling factor *f*(triangle) = 0.35. The arrangement of the circular rods 108 provides a two-dimensional photonic crystal for wavelengths, which may exhibit a photonic band gap. The optical input/output configuration shown in Fig. 7 corresponds to that of Fig. 6.

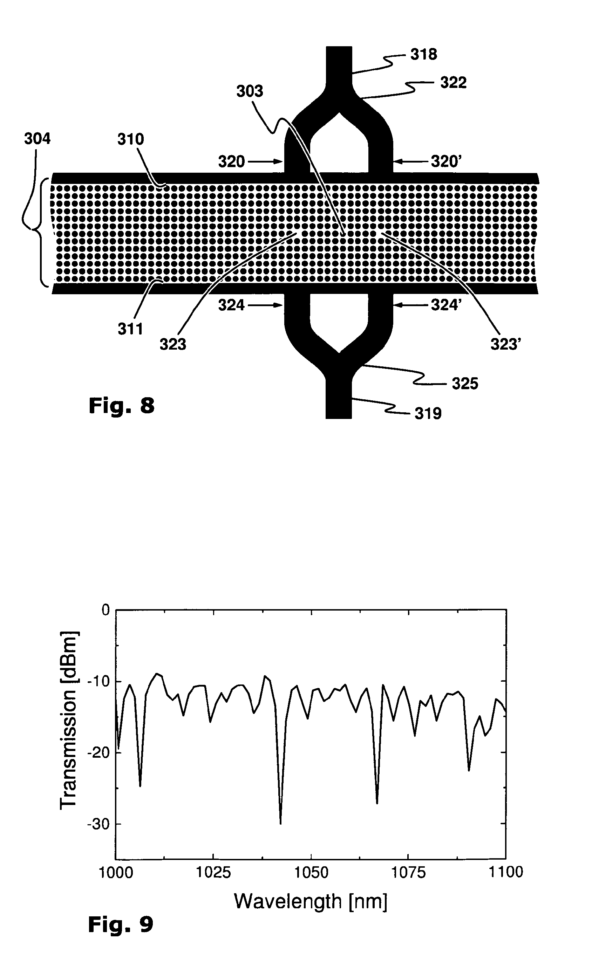

Fig. 8 shows a further embodiment of the device according to the invention. The device is based on the photonic crystal structure shown in Fig. 7. The input waveguide 318 is split into two waveguides 320, 320' at the proximal end by means of an optical waveguide splitter 322. The device is thus provided with two input ports 320, 320' at the first side 310 of the microfluidic channel 304, and two corresponding output ports 324, 324' on the second side 311 of the microfluidic channel 304. In each of the two optical paths connecting the input ports 320, 320' with the respective output ports 324, 324' a lattice defect 323, 323' is created in the photonic crystal by removing a rod. The defects 323, 323' act as a resonator cavity enhancing the interaction of the probing light with the fluid sample. The light transmitted through the optical resonator cavities is collected by the two output waveguides 324, 324' and recombined by means of a waveguide coupler 325 into a single output port 319.

This optical arrangement allows for comparing the refractive index in two different locations of the separation structure by coherently comparing the optical output by interference. This provides a differential measurement of changes in the refractive index as the different fluid components pass through the separation part.

Fig. 9 gives an example of a transmission spectrum of a fluid obtained using a further embodiment of the device according to the invention. In this embodiment, the micro-structure elements are covered by an additional layer of 100 nm amorphous silicon (a-Si) acting as a half-transparent mirror and improving the finesse of the optical resonator cavity formed by the micro-structure elements.

The invention has been described with reference to a preferred embodiment. However, the scope of the invention is not limited to the illustrated embodiment, and alterations and modifications can be carried out without deviating from said scope of the invention. For instance, it is also possible to distribute the rods so that they together form a diverging pattern in the longitudinal direction of the device. Furthermore, the different probing regions of a given embodiment, such as the probing regions 3 and 3' in Fig. 1, may comprise microstructure elements being arranged with different periodicity. Furthermore, it can be contemplated to construct a device having two or more of the devices shown cascade-coupled in series or side by side. Also, the two or more probing regions can comprise rods of different materials, thereby ensuring that at least one of the probing regions does not contain a material having a refractive index being close to that of the fluid components. Furthermore, the optical probing techniques can comprise advanced spectroscopic techniques, such as Raman-spectroscopy. Devices according to the invention may also be used in systems for mass-spectroscopy.

### List of reference numbers

- 1: substrate
- 2: separation part
- 3, 3', 103, 203, 303: optical probing region
- 4, 104, 204, 304: microfluidic channel
- 5: first end
- 6: second end
- 7: microstructure elements
- 8: slab
- 108, 208: circular rod
- 9: sub-channel
- 10,310: first side
- 11, 311: second side
- 12: bottom
- 13: top
- 14: lower cladding
- 15: core layer
- 16: top cladding
- 17: cover glass
- 18, 118, 218, 318: input port
- 19,119,219,319: output port
- 120: proximal end
- 121: distal end
- 122, 322: waveguide splitter
- 320, 320': input waveguide
- 323, 323': defect
- 324, 324': output waveguide
- 325: waveguide coupler

- a, a': periodicity / mutual interspacing
- d, d': critical dimension

## Claims

1. A device for analysis of a fluid sample by separation, such as chromatography, and optical probing,
- said device extending in a longitudinal direction and having a first transverse direction perpendicular to the longitudinal direction, and a second transverse direction perpendicular to both the longitudinal and the first transverse direction,
- said device comprising a separation part (2) and at least one optical probing region (3) overlapping the separation part (2), wherein
- said separation part (2) comprises at least one fluid permeable microfluidic channel (4) extending substantially in the longitudinal direction and having a first end (5) with a first opening and a second end (6) with a second opening, as well as a first side (10) and a second side (11), and wherein
- said microfluidic channel (4) comprises at least a first set of micro-structure elements (7) partially filling the microfluidic channels (4) with a filling factor of *f*= Vₘ/V₀, where Vₘ is the volume occupied by the micro-structure elements (7) within a region of a volume V₀ in the microfluidic channel (4) that is filled with micro-structure elements, and
- said microfluidic channel (4) and/or micro-structure elements (7) are adapted to interact with a fluid, when said fluid enters the microfluidic channel through the first opening (5) and flows towards the second opening (6), in order to separate said fluid into different components, and
- said micro-structure elements (7) in at least one direction being arranged with a substantially periodic distribution with a mutual interspacing *a* between micro-structure elements (7) so as to form an electromagnetic filter, which is sensitive to the optical properties of said fluid components, when permeating the microfluidic channel (4).

2. A device according to claim 1, wherein the electromagnetic filter is a photonic crystal for light, optionally forming a photonic band gap.

3. A device according to claim 1 or 2, wherein the micro-structure elements (7) are made from a dielectric material with a refractive index larger than 1, alternatively in the range between 1.2 and 5, or alternatively in the range between 1.3 and 2.

4. A device according to any of the preceding claims, wherein said device is provided on a substantially planar substrate (1), such that the longitudinal direction and the first transverse direction are arranged within the plane of said substrate (1).

5. A device according to claim 4, wherein the micro-structure elements (7) are arranged with a substantially periodic distribution in one dimension, preferably in the in-plane transverse direction of the substrate (1).

6. A device according to claim 5, wherein the micro-structure elements (7) are oblong and extending substantially in the longitudinal direction of the substrate (1) so as to form a number of substantially parallel channels (9) within said at least one microfluidic channel (4).

7. A device according to any of claims 4 - 6, wherein the micro-structure elements (7) are arranged substantially periodic in two dimensions, preferably periodic in the plane of the substrate (1).

8. A device according to claim 7, wherein the micro-structure elements (7) have a quadrilateral distribution so as to form a quadrilateral lattice structure.

9. A device according to claim 7, wherein the micro-structure elements (7) have a triangular distribution so as to form a triangular lattice structure.

10. A device according to any of claims 7 - 9, wherein the micro-structure elements are rods (108, 208, 308) extending in the transverse direction out of the plane of the substrate (1).

11. A device according to any of the preceding claims, wherein the micro-structure elements (7) are arranged substantially periodic in three dimensions.

12. A device according to any of the preceding claims, wherein the filling factor f is in the range 0.05 - 0.95, alternatively in the range 0.2 - 0.8, alternatively in the range 0.3 - 0.7.

13. A device according to any of the preceding claims comprising a plurality of sets of micro-structure elements (7).

14. A device according to any of the preceding claims, further comprising an input port (18), such as a waveguide, which is connectable to a light source, such as a laser, a light-emitting diode or a white light source, and which is arranged in or at least in vicinity of the optical probing region (3) at the first side (10) of the at least one microfluidic channel (4).

15. A device according to claim 14, further comprising an output port (19), which is connectable to an optical detection circuit, and which is arranged in or at least in the vicinity of the optical probing region (3) at the second side (11) of the at least one microfluidic channel (4) and/or at the first side (10) of the at least one microfluidic channel (4).

16. A device according to claim 15, comprising along the longitudinal direction of the optical probing region (3) a number of input ports (18) and a number of corresponding output ports (19).

17. A device according to any of claims 15 or 16, wherein the same optical port acts as an input port 18 and as an output port 19.

18. A system comprising a device according to any of claims 15-17, further comprising:
- a first microfluidic network for preparation and injection of a fluid sample into the first opening (5) of the microfluidic channel (4) and a second microfluidic network for disposal and/or further processing of the fluid sample after the analysis and connected to the second opening (6) of the microfluidic channel (4),
- at least one light source connected to the at least one input port (18),
- optical detection means connected to the at least one output port (19), and
- means for driving the fluid flow, such as an electrical circuit or hydrostatic pressure means.

19. A system according to claim 18, wherein the optical input port (18) and/or the optical output port (19) are formed on the substrate (1) by integrated optical waveguides.

20. A system according to claim 18 or 19, further comprising data collection means, data storage means and display means, such as a computer.

21. A method for probing the optical characteristics of a fluid sample in a fluid permeable microfluidic channel (4) having a longitudinal direction with a first end with a first opening (5) and a second end with a second opening (6) as well as a first side (10) and a second side (11), the microfluidic channel (4) comprising a number of micro-structure elements (7) arranged within the microfluidic channel (4), wherein the method comprises the steps of:
a) injecting the fluid sample into the microfluidic channel (4) through the first opening (5),
b) separating the fluid sample by use of at least a number of said micro-structure elements (7) into different components by flowing said fluid sample towards the second opening (6), and
c) transmitting light from the first side (10) into an optical probing region (3) of the microfluidic channel (4) comprising at least a number of said micro-structure elements (7) being arranged with a substantially periodic distribution,
d) collecting out-coming light from the microfluidic channel (4), and
e) analysing the collected light with respect to optical parameters, such as spectral composition, polarisation, intensity and/or propagation direction.

22. A method according to claim 21, wherein the separation is performed by use of at least a number of said periodically distributed micro-structure elements (7).

23. A method according to claim 21 or 22, wherein the out-coming light is collected at the second side (11) of the microfluidic channel (4).

24. A method according to claim 21 or 22, wherein the out-coming light is collected at the first side (10) of the microfluidic channel (4).

25. A method according to any of claims 21 - 24, wherein the fluid sample is continuously flown through the separation part (2) and the optical detection region (3), and wherein the probing of the optical characteristics of the fluid passing through the optical probing region (3) is carried out continuously or repeatedly by performing steps c) through e).

26. A method according to any of claims 21 - 25, further comprising the step of
f) comparing the obtained optical characteristics data with reference data.
